# EUROPEAN PATENT APPLICATION

(11) **EP 3 469 918 A1**
(43) Date of publication of application: **17.04.2019**
(21) Application number: 18207285.0
(22) Date of filing: 20.07.2010
(51) Int. Cl.: A23J 3/14, A23J 3/04, A23J 3/16, A23J 3/26, A23L 7/126, A23L 7/17, A23L 13/40, A23L 13/60, A23P 30/20, A23L 7/117

(54) **METHOD FOR PRODUCING AMORPHOUS PROTEIN EXTRUDATES AND AMORPHOUS PROTEIN EXTRUDATES**

(30) Priority: 20.07.2009 US 22691109 P; 30.11.2009 US 26511809 P
(62) Divisional of application: 10802806.9
(71) Applicant: Solae, LLC, St. Louis, MO 63110 (US)
(72) Inventor: SOLORIO, Santiago, St. Louis, Missouri 63110 (US)
(74) Representative: DuPont EMEA

(57) **Abstract**

The present invention relates to amorphous food materials containing an amount of protein and processes for its manufacture. More particularly, the present invention relates to amorphous protein extrudates containing high concentrations of protein, processes for manufacturing such protein extrudates, and the use of such protein extrudates as food ingredients.

## Description

### CROSS REFERENCE TO RELATED APPLICATIONS

This application claims priority from Provisional Application Serial No. 61/226,911 filed on July 20, 2009 and Provisional Application Serial No. 61/265,118 filed on November 30, 2009, which are hereby incorporated by reference in their entirety.

### FIELD OF THE INVENTION

The present invention relates to an amorphous food material containing a high concentration of protein and processes for its manufacture. More particularly, the present invention relates to amorphous protein extrudates containing high concentrations of protein, processes for manufacturing such amorphous protein extrudates, and the use of such amorphous protein extrudates as foods and food ingredients.

### BACKGROUND OF THE INVENTION

Expanded protein products are known in the art and are typically prepared by heating a mixture containing protein materials along with water under mechanical pressure in a cooker extruder and extruding the mixture through a die. Upon extrusion, the extrudate generally expands to form a cellular structure as it enters a medium of reduced pressure (usually atmospheric). Expansion of the extrudate typically results from inclusion of soluble carbohydrates, which reduce the gel strength of the mixture. The extrudates are then used to form other products desired by consumers.

Extrusion cooking devices have long been used in the manufacture of a wide variety of edible and other products such as human and animal feeds. Generally speaking, extruders include an elongated barrel together with one or more internal, helically flighted, axially rotatable extrusion screws therein. The outlet of the extruder barrel is equipped with an apertured extrusion die. In use, a material to be processed is passed into and through the extruder. As the material emerges from the extruder die, it is shaped and may typically be subdivided using a rotating knife assembly. Conventional extruders of this type are described, for example, in U.S. Pat. Nos. 4,763,569, 4,118,164 and 3,117,006, which are incorporated herein by reference. Alternatively, the expanded protein product may be cut into smaller extrudates such as nuggets for use as food or food ingredients.

In use, a material to be processed is passed into and through the extruder barrel and is subjected to increasing levels of temperature, pressure, and shear. The material emerges from the extruder die in a rope format that is fully cooked and ready for further processing to produce the desired end products. Typical texturized protein processed extrudates or "rope" products are uniform products that have sensory characteristics similar to processed food, fabricated, or non-natural food products that consumers view with hesitation. Examples of additional processing include external rope cutting, cutting, re-forming, and other particle size reduction techniques. This uniform "rope" product requires further processing to create a desired consumer end product, such as a nugget. And even with the additional processing the products typically look like processed, fabricated, or non-natural food products. Therefore, there is a need to produce an expanded protein product that possesses the sensory characteristics of an amorphous look, non-fabricated, natural food products.

### SUMMARY OF THE INVENTION

Among the various aspects of the invention are amorphous protein extrudates containing high concentrations of protein that are amorphous looking and possess amorphous internal cell structure, and the process for producing the amorphous protein extrudates. The amorphous protein extrudates possess non-uniform external and internal (cellular) structures. The amorphous protein extrudates exhibit natural, non-fabricated characteristics that consumer's desire.

Processes for making the amorphous protein extrudates are another aspect of the invention. In one process, the extrudate exiting the die hole is non-contiguous. In another process, the extrudate is disrupted by the cutter at about the time of expansion to form the amorphous protein extrudate.

Other features will be in part apparent and in part pointed out hereinafter.

### DESCRIPTION OF THE DRAWINGS

FIG. 1 is a photograph demonstrating the external structure of an amorphous protein extrudate produced according to Example 1 of the present invention.
FIG. 2 is a photograph demonstrating the external structure of an amorphous protein extrudate produced according to Example 13 of the present invention.
FIG. 3 is micrographs showing the exterior surface cap view of Example 41, Example 42, and Example 43.
FIG. 4 is micrographs showing the surface longitudinal view of Example 41, Example 42, and Example 43.
FIG 5 is micrographs showing the cross section axial view of Example 41, Example 42, and Example 43.
FIG 6 is micrographs showing the cross section longitudinal view of Example 41, Example 42, and Example 43.
FIG. 7 is a photograph showing typical extruded pieces (Examples 41 and 42) and extruded pieces of the current invention (Example 43).
FIG. 8 is a schematic flow diagram of a process useful in preparing the protein extrudates of the present invention.
FIG. 9 is a diagram of the cutting process for typical extruded pieces (Examples 41 and 42) and amorphous extruded pieces (Example 43) from the current invention as taught by Example 13.

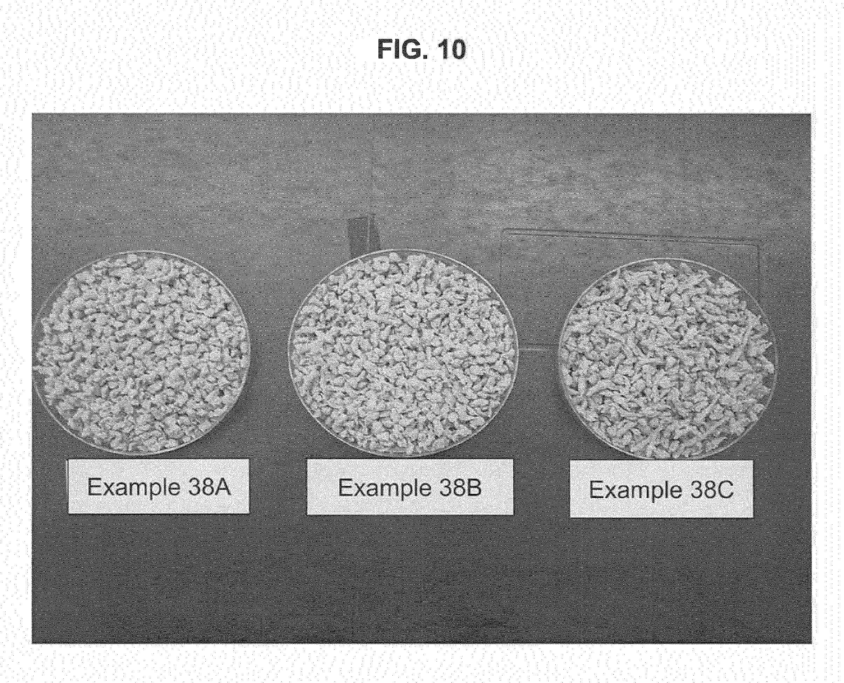

FIG. 10 is a photograph showing 40% protein and multigrain amorphous protein extrudates as disclosed in Examples 38A, 38B, and 38C.

### DETAILED DESCRIPTION

In accordance with the present invention, it has been discovered that amorphous protein extrudates, containing high concentrations of protein and additional ingredient components, can be manufactured to have a desired density, acceptable texture, and acceptable stability using extrusion technology. Such amorphous protein extrudates can be formed as nuggets (also known as crisps) or pellets for use as an ingredient or source of protein in health and nutrition bars, snack bars, and ready-to-eat cereal. Alternatively, the protein extrudates may be further processed for use as a binder, a stabilizer, or a source of protein in health and nutrition bars, dairy foods, baked foods, and emulsified meats and ground meats.

The processes include preparing the preconditioned feed mixture, contacting the feed mixture with moisture, introducing the preconditioned feed mixture into an extruder barrel, heating to form a molten extrusion mass, and extruding the molten extrusion mass through a die. In one embodiment the molten extrusion mass exits the die in a non-contiguous manner. In another embodiment, the molten extrusion mass exits the die and is cut with the blades of the cutter positioned at a fixed distance from the extrusion die face, wherein the cutting occurs about the time of the expansion phase of the molten extrusion mass thus producing the amorphous protein extrudate.

### Protein

The protein-containing feed mixture typically comprises at least one source of protein and has an overall protein concentration of at least about 25%, 30%, 40%, 50%, 60%, 70%, 80%, 90% 99% or more protein by weight of the mixture on a moisture-free basis. Proteins contained in the feed mixture may be obtained from one or more suitable sources including, for example, vegetable protein, dairy protein, or meat protein materials. The proteins can be hydrolyzed or unhydrolyzed isolated soy protein (ISP or soy protein isolate), hydrolyzed or unhydrolyzed soy protein concentrate (SPC), hydrolyzed or unhydrolyzed soy flour, hydrolyzed or unhydrolyzed isolated whey protein (IWP), hydrolyzed or unhydrolyzed whey protein concentrate (WPC), and combinations thereof. Vegetable protein materials may be obtained from cereal grains such as wheat, corn, and barley, legumes, including soybeans and peas, as well as other vegetables which contain protein. In one embodiment, a soy protein material is the source of the protein. In other embodiments, the protein source can be flours, including soy flour, fava bean flour, pea flour, lentil flour, grain based flours, such as rice flour, corn flour, barley flour, oat flour, wheat flour, amaranth flour, quinoa flour, and combinations thereof.

In another embodiment, the protein source may be obtained from a dairy protein source. The dairy protein materials may be obtained from any source used in the industry but not limited to whey protein concentrate (WPC 80 Farbest Brands, Louisville, KY), whey protein isolate (BiPRO™, Davisco Foods International, Le Sueur, MN), whey solids, milk protein concentrate and isolate, milk solids, casein salts, non-fat dairy milk, whole fat dairy milk and combinations thereof. When dairy protein is present in the amorphous protein extrudates it is present in an amount from 25%, 30%, 40%, 50%, 60%, 70%, 80%, 90%, 99% or more by weight on a moisture free basis, based on the weight of the amorphous protein extrudate. In another embodiment the protein source can be a combination of vegetable proteins and dairy proteins.

Typically, when soy protein is present in the amorphous protein extrudates, the soy protein is present in an amount of from about 25%, 30%, 40%, 50%, 60%, 70%, 80%, 90%, 95%, 99% or more by weight on a moisture-free basis, based on the weight of the amorphous protein extrudate. In some instances, the soy protein is present in the amorphous protein extrudate in an amount of between about 40% to about 90% by weight on a moisture-free basis and, in other instances, between about 60% to about 80% by weight on a moisture-free basis.

Suitable soy protein materials include soy flakes, soy flour, soy grits, soy meal, soy protein concentrates, isolated soy proteins, and combinations thereof. The primary difference between these soy protein materials is the degree of refinement and/or particle size. Soy flour generally has a particle size of less than about 150µm. Soy grits generally have a particle size of about 150µm to about 1000µm. Soy meal generally has a particle size of greater than about 1000µm. Soy protein concentrates typically contain between about 65% to less than about 90% by weight soy protein. Isolated soy proteins, more highly refined soy protein materials, are processed to contain at least about 90% by weight soy protein and little or no soluble carbohydrates or fiber.

The overall protein content of the feed mixture may be achieved by a combination (i.e., blend) of suitable sources of protein described above. In certain embodiments, when soy protein is used, it is preferred for isolated soy proteins to constitute one or more of the sources of protein contained in the feed mixture. For example, a preferred feed mixture formulation may comprise a blend of two or more isolated soy proteins. Other suitable formulations may comprise at least one soy protein concentrate in combination with at least one isolated soy protein.

In another embodiment, the feed mixture may contain a single soy protein material. The single soy protein material is either a hydrolyzed soy protein or an unhydrolyzed soy protein.

### Single Source Soy Protein

In certain embodiments, the feed mixture comprises a single source of soy protein. The source of the soy protein may be a hydrolyzed soy protein or an unhydrolyzed soy protein.

### Blends of Hydrolyzed and Unhydrolyzed Proteins

The viscosity and/or gelling properties of an isolated soy protein may be modified by a wide variety of methods known in the art. For example, the viscosity and/or gelling properties of an isolated soy protein may be decreased by partial hydrolysis of the protein. Typically, soy protein materials treated in this manner are described in terms of degree of hydrolysis which can be determined based on molecular weight distributions, sizes of proteins and chain lengths, or breaking down of beta-conglycinin or glycinin storage proteins. The proportion of cleaved peptide bonds in a sample can be measured by calculating the amount of trinitrobenzene sulfonic acid (TNBS) that reacts with primary amines in the sample under controlled conditions.

Hydrolyzed protein materials used in accordance with the processes of the present invention typically exhibit TNBS values of less than about 160, more typically less than about 115 and, still more typically, from about 30 to about 70.

Hydrolyzed soy protein sources sufficient for use in the process of the present invention typically have a degree of hydrolysis of less than about 15%, preferably less than about 10% and, more preferably, from about 1% to about 5%. In the case of isolated soy proteins, the hydrolyzed soy protein material typically comprises a partially hydrolyzed isolated soy protein having a degree of hydrolysis of between about 1% to about 5%.

In accordance with some embodiments of the present invention, a hydrolyzed protein source is typically combined with an unhydrolyzed protein source to form the blend. The hydrolyzed protein source and unhydrolyzed protein source can be combined in varying proportions depending on the desired characteristics of the extrudate.

In an embodiment, the protein-containing feed mixture typically comprises a blend of isolated soy proteins comprising at least about 3 parts by weight of a hydrolyzed isolated soy protein per part by weight of an unhydrolyzed isolated soy protein, in other embodiments, at least about 4 parts by weight of a hydrolyzed isolated soy protein per part by weight of an unhydrolyzed isolated soy protein and, in still other embodiments, at least about 5 parts by weight of a hydrolyzed isolated soy protein per part by weight of an unhydrolyzed isolated soy protein. The blend of isolated soy proteins may comprise between about 3 parts by weight to about 8 parts by weight of a hydrolyzed isolated soy protein per part by weight of an unhydrolyzed isolated soy protein. The blend of isolated soy proteins may comprise between about 5 parts by weight to about 8 parts by weight of a hydrolyzed isolated soy protein per part by weight of an unhydrolyzed isolated soy protein.

In various embodiments, blends comprising a plurality of isolated soy proteins typically comprise between about 25% to about 80% by weight of a hydrolyzed soy protein isolate on a moisture-free basis and between about 1% to about 60% by weight of an unhydrolyzed isolated soy protein on a moisture-free basis, based on the weight of the feed mixture or protein extrudate. More typically, such blends comprise between about 50% to about 75% by weight of a hydrolyzed isolated soy protein on a moisture-free basis and between about 5% to about 15% by weight of an unhydrolyzed isolated soy protein on a moisture-free basis, based on the weight of the feed mixture or protein extrudate.

Suitable hydrolyzed isolated soy protein sources include SUPRO®XT219, SUPRO®313, SUPRO®670, SUPRO®710, SUPRO®XF8020, and SUPRO®XF8021 made by Solae, LLC (St. Louis, MO). For SUPRO®670 and SUPRO®710, the degree of hydrolysis can range between about 0.5%- about 5.0%.

Suitable sources of unhydrolyzed isolated soy protein for use as an isolated soy protein include SUPRO®248, SUPRO®620, SUPRO®500E, SUPRO®1500, SUPRO®EX33, SUPRO®EX45, ISP 95 made by Solae, LLC.

### Additional Ingredients

Sources of starch, such as from rice flour, pregelatinized starch such as pregelled tapioca or pregelled rice flour, corn flour, oat flour, barley flour, and other cereal grain flour sources, soy fiber, such as but not limited to Fibrim®, an 80 percent total dietary fiber ingredient made by Solae, LLC, dicalcium phosphate, and soy lecithin can be added to the amorphous protein extrudate. Such ingredients modify the cell structure in final products, and help improve the flowability of the feed mixture in the process. In other embodiments ingredients typically used in the industry can be used including calcium carbonate, calcium bicarbonate, sodium bicarbonate, and combinations thereof.

In other embodiments, additional ingredients can be included dependent on the desired end products. Examples of additional ingredients include sweeteners, flavorants, or colorants. A non-exhaustive list of additional ingredients are malt extract, brown rice syrup, cocoa powder, and caramel color. Generally the amount of other ingredients is between 0.01% and 20% by weight of amorphous protein extrudate.

### Carbohydrates

The protein containing feed mixture may also contain one or more carbohydrate sources in an amount between about 0.001 % to about 90% by weight carbohydrates on a moisture-free basis. The carbohydrates present in the feed mixture can be soluble carbohydrates or insoluble carbohydrates. Typically, the protein-containing feed mixture comprises between about 10% to about 90% by weight carbohydrates on a moisture-free basis and, more typically between about 15% to about 40% by weight carbohydrates on a moisture-free basis. In some embodiments, the extrudate contains between about 10% to about 20% by weight carbohydrates. In other instances, between about 1 to about 5% by weight or between about 1% to about 10% by weight carbohydrates are in the feed mixture or amorphous protein extrudate. Suitable sources of soluble carbohydrates include native and modified, for example, cereals, tubers and roots such as rice (e.g., rice flour), wheat, corn, barley, potatoes (e.g., native potato starch), and tapioca (e.g., native tapioca starch). Insoluble carbohydrates and/or resistant starches do not contribute to nutritive carbohydrate load yet may aid in processing of the mixture by facilitating flowability and expansion of the feed mixture.

### Fiber

The protein containing feed mixture may also contain an amount of fiber. The fiber can be a general ingredient or can be used as a processing aid. The feed mixture can comprise between about 0.001 % to about 75% by weight fiber. In some embodiments, the feed mixture can comprise between about 10% to about 50% by weight fiber. Fiber, such as soy fiber, absorbs moisture as the extrusion mass flows through the extrusion barrel to the die. Flashing or release of the moisture contributes to expansion, i.e., "puffing," of the extrudate, and producing the low-density extrudate of the invention. The extrudates may contain a quantity of fiber on a moisture free basis, based on the weight of the feed mixture or protein extrudate, dependent on the desired end product.

### Whole Grain or Multigrain Component

Whole grains consist of the intact, ground, cracked or flaked grain, whose principal anatomical components (the starchy endosperm, germ and bran) are present in the same relative proportions as they exist in the intact grain.

In one embodiment, the whole grain component includes endosperm, bran, and germ. The germ is an embryonic plant found within the wheat kernel and includes lipids, fiber, vitamins, protein, minerals and phytonutrients, such as flavonoids. The bran includes several cell layers and has a significant amount of lipids, fiber, vitamins, protein, minerals and phytonutrients, such as flavonoids. Further, the whole grain component includes endosperm and within the endosperm, an aleurone layer. This aleurone layer includes lipids, fiber, vitamins, protein, minerals and phytonutrients, such as flavonoids. The aleurone layer exhibits many of the same characteristics as the bran and therefore is typically removed with the bran and germ during the milling process. The aleurone layer contains proteins, vitamins and phytonutrients, such as ferulic acid. Although the bran and the germ only make up about 18% of the wheat kernel by weight, they may account for about 75% of a number of the nutritients in the wheat.

In various embodiments, the grain component can be a whole grain flour (e.g., an ultrafine-milled whole grain flour, such as an ultrafine-milled whole grain wheat flour; a whole grain wheat flour, or a flour made from about 100% of the grain) and/or a refined flour component (e.g. degermed and/or debranned flour). For example the grain can be selected from wheat, sorghum, milo, triticale, emmer, einkorn, spelt, oats, corn, rye, barley, rice, millet, buckwheat, quinoa, amaranth, teff, canary seed, wild rice, buckwheat, variants thereof, and mixtures thereof.

### Water

Generally, water is present in the dried extrudate at a concentration of from about 1% to about 10% by weight, or from about 2% to about 6.0% by weight. The amount of water added may vary depending on the desired composition and physical properties of the extrudate (e.g., carbohydrate content and density).

### Physical and Structural Properties of the Amorphous Extrudate

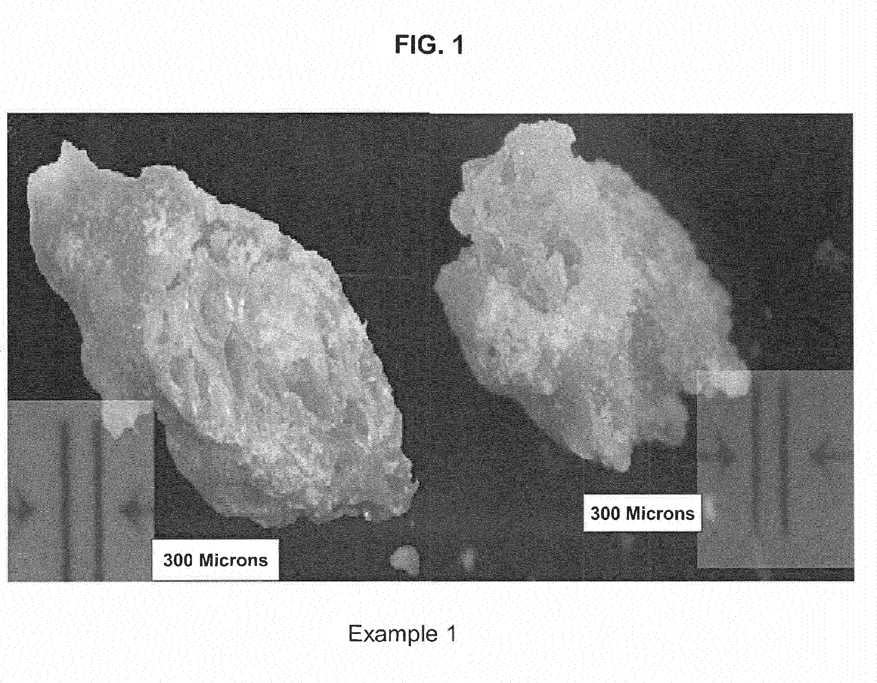

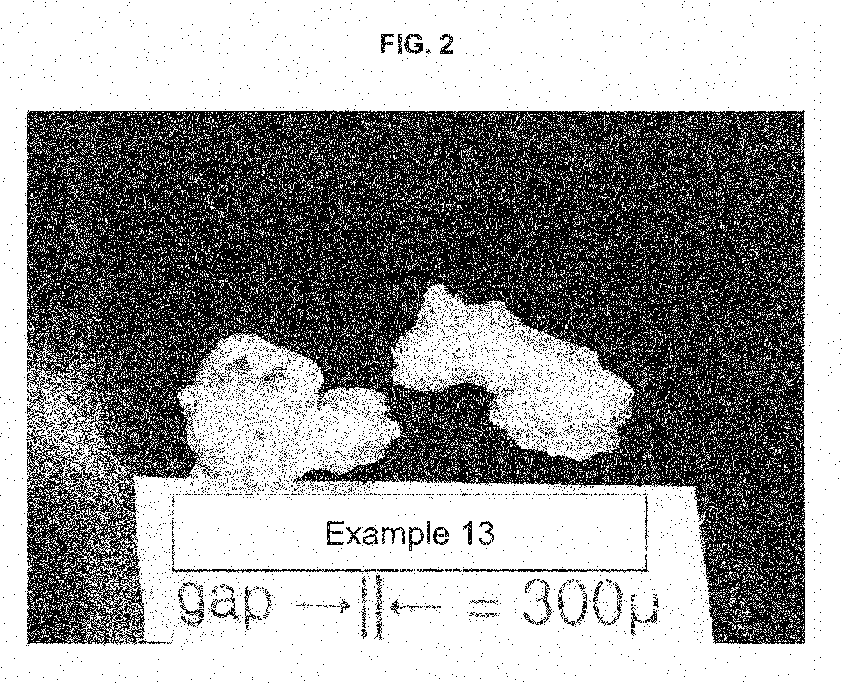

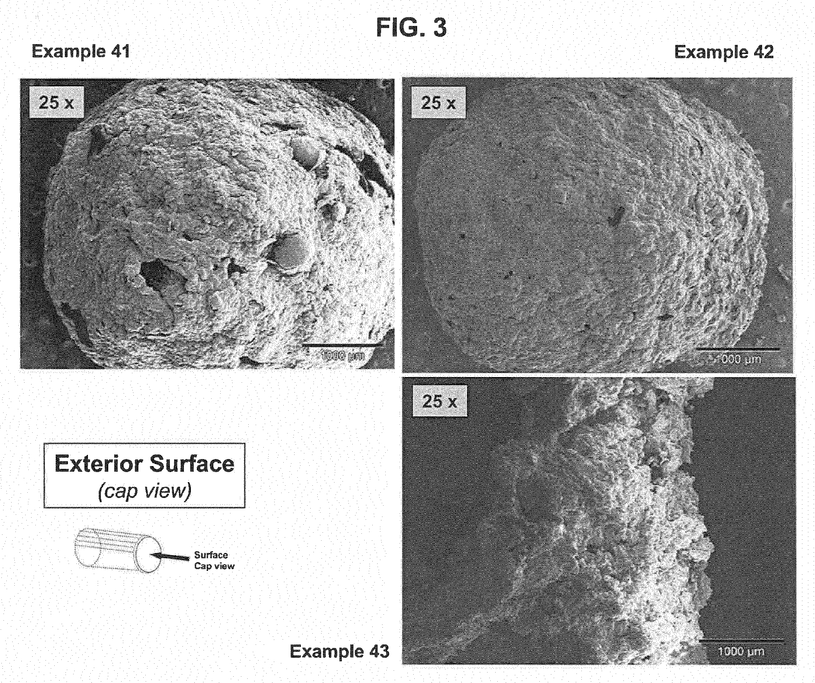

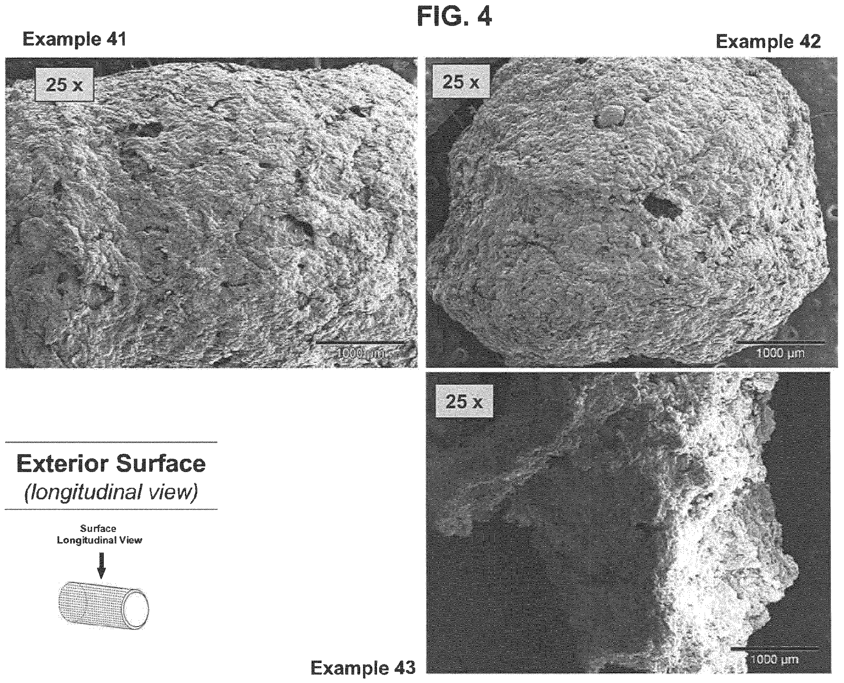

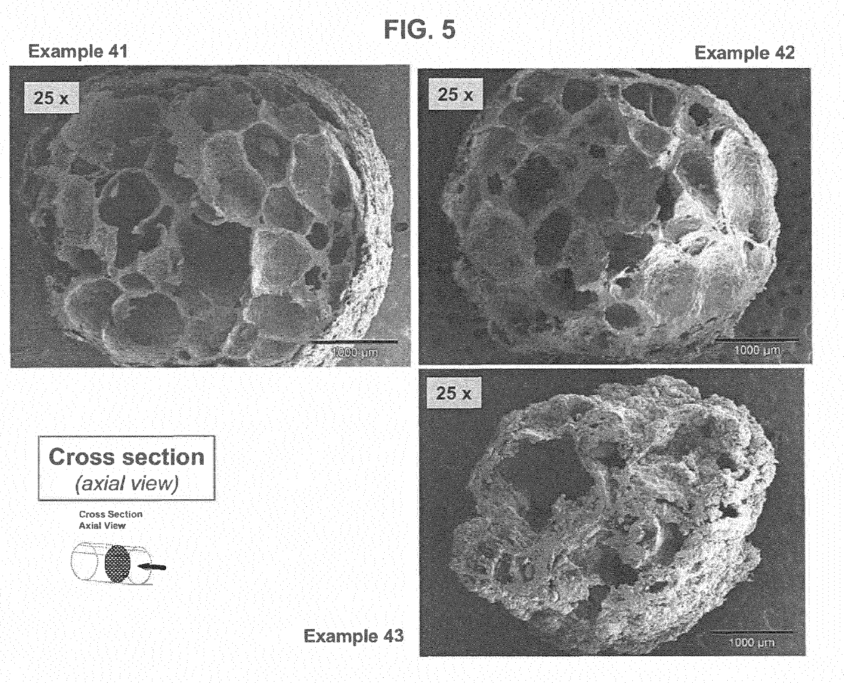

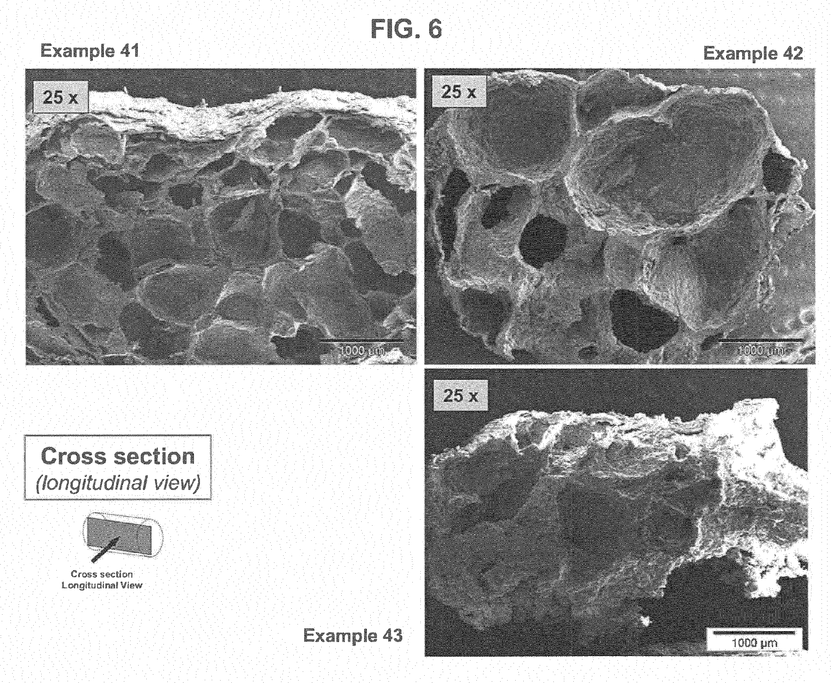

The amorphous protein extrudate is demonstrated in FIGs. 1 and 2. FIGs. 3-6 provide images of the external and internal structure of typical protein extrudate products (Examples 51 and 52) currently on the market. FIGs. 3-6 are used to provide comparative analysis and demonstrate the distinctive internal and external structure of the amorphous protein extrudate of the current invention.

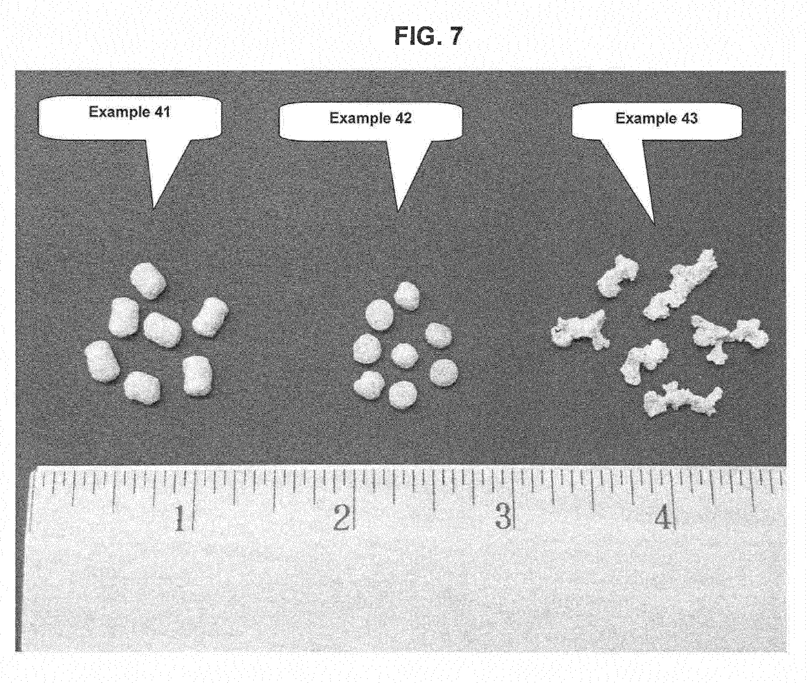

The amorphous protein extrudates shown in FIGs. 1 through 6 are extrudates that possess distinctive physical characteristics that simulate a product that is natural or non-fabricated in appearance. The amorphous or non-structured extrudate produces a product that has numerous exterior protrusions that create a unique texture. FIG. 7 demonstrates the more uniform exterior of typical products on the market (Examples 51 and 52) and contrasts these amorphous protein extrudates (Example 53). The more uniform appearance of the typical products creates the appearance of a fabricated product. The amorphous protein extrudate possesses an internal amorphous structure. The internal structure shown in FIGs. 1, 2, 5, and 6 demonstrates a network of internal voids that are of varying shape and sizes. This non-uniform or varied internal structure creates a unique desirable product that in comparison to the more uniform internal structure of typical products (Figs. 3 - 7) are more desirable because of the non-fabricated and more natural appearance.

Generally, the amorphous protein extrudates of the present invention have a dry bulk density of between about 0.02 g/cm³ to about 0.5 g/cm³. Preferably, the amorphous protein extrudates of the present invention have a dry bulk density of between about 0.05 to about 0.35 g/cm³.

The amorphous protein extrudates of the present invention may be further characterized as having a hardness of at least about 1000 grams. Typically, the protein extrudates have a hardness of between about 1000 grams to about 50,000 grams and, more typically, between about 5,000 grams to about 40,000 grams. In various preferred embodiments, the hardness is between about 7,000 grams to about 30,000 grams.

### Particle Sizes

The amorphous protein extrudates may exhibit a wide range of particle sizes. The actual appearance is a non-shape or amorphous structure.

### Food Products

The amorphous protein extrudates of the present invention can be used in any applications that currently use nuggets or pellets. The extrudates of the present invention are suitable for incorporation into a variety of food products including, for example, meat extender, breadings, food bars, and ready-to-eat cereals. The ready-to-eat cereals may be hot ready-to-eat cereals or cold ready-to-eat cereals. The extrudates are also suitable for incorporation into baked goods such as breads and cookies. Other uses are in or as snacks and trail mixes, confectionaries, toppings for both desserts and salads, or in granola. The amorphous protein extrudates can be incorporated in such applications in place of nuggets pellets.

In some embodiments, the amorphous protein extrudate is in the form of a low-density snack product. These low-density snack food products generally have a dry bulk density of between about 0.02 g/cm³ to about 0.5 g/cm³ and, more typically between about 0.15 g/cm³ to about 0.35 g/cm³. These amorphous protein extrudates exhibit a crisp texture. In certain embodiments, the products have a dry bulk density of between about 0.1 g/cm³ to about 0.4 g/cm³, between about 0.15 g/cm³ to about 0.35 g/cm³, between about 0.20 g/cm³ to about 0.27 g/cm³, between about 0.24 g/cm³ to about 0.27 g/cm³, or alternatively between about 0.27 g/cm³ to about 0.32 g/cm³.

In addition to protein, the food products of the present invention may comprise other solid components (i.e., fillers or binders) such as carbohydrates or fibers. The product may include filler in a ratio of filler to protein in the range of between about 1:99 to about 75:25. In certain embodiments, a majority of the filler is starch. Suitable starches include rice flour, potato, tapioca, and combinations thereof.

Low density food products of the present invention typically contain water at a concentration of between about 1% and about 10% by weight of protein, filler, and water and, more typically, between about 2% and about 6% by weight of protein, filler, and water.

### Meats

In various embodiments, the amorphous protein extrudate of the present invention is used in emulsified meats to provide structure to the emulsified meat, providing a firm bite and a meaty texture. The amorphous protein extrudate also decreases cooking loss of moisture from the emulsified meat by readily absorbing water, and prevents "fatting out" of the fat in the meat so the cooked meat is juicier.

In one embodiment, the meat material used to form a meat emulsion in combination with the amorphous protein extrudate of the present invention is preferably a meat useful for forming sausages, frankfurters, or other meat products which are formed by filling a casing with a meat material or in another embodiment can be a meat which is useful in ground meat applications such as hamburgers, meat loaf and minced meat products. Particularly preferred meat material used in combination with the protein extrudate includes mechanically deboned meat from chicken, beef, and pork; pork trimmings; beef trimmings; and pork backfat.

### Extrusion Process

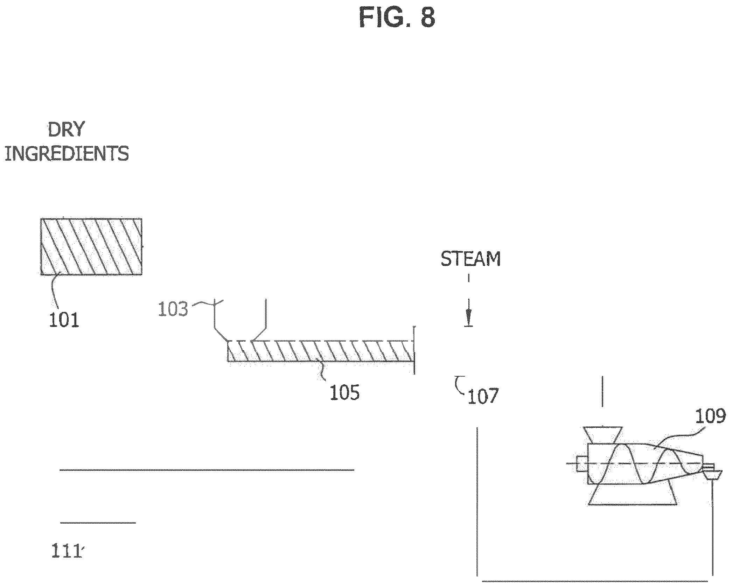

Referring now to FIG. 8, one embodiment of the process of the present invention is shown. The process comprises introducing the particular ingredients of the protein-containing feed mixture formulation into a mixing tank 101 (i.e., an ingredient blender) to combine the ingredients and form a protein feed pre-mix. The pre-mix is then transferred to a hopper 103 where the pre-mix is held for feeding via screw feeder 105 to an optional preconditioner 107 to form a conditioned feed mixture. The conditioned feed mixture is then fed to an extrusion apparatus (i.e., extruder) 109 in which the feed mixture is heated under mechanical shear and/or pressure generated by the screws of the extruder to form a molten extrusion mass. The molten extrusion mass exits the extruder through openings in an extrusion die.

In preconditioner 107, water and/or steam are injected into the blend. The preconditioner 107 promotes uniform mixing of the blend with the water and/or steam and transfers the conditioned blend through the preconditioner 107.

The material to be extruded can be the preconditioned blend or in embodiments where the feed mixture is not preconditioned, the feed mixture. The material to be extruded is fed into the extruder 109.

The material to be extruded passes through the extruder at a rate dependent on the size and configuration of the extruder. The extruder screw speed may vary depending on the particular extruder used. One skilled in the art will choose an extruder screw profile and operating conditions that will deliver a suitable product out of the die depending on the end use of the extrudate.

The extrusion apparatus 109 generally comprises a plurality of barrel zones through which the material to be extruded is conveyed by the screws. The extruder may be characterized by its screw profile. The complexity and screw designs vary amongst and within extruder manufacturers. The screw configuration shown in Table 1 may be applied to commercially available extruders in order to produce the amorphous protein extrudates.

**Table 1**

| **Position** | **Screw Type** | **Length-Distance (D)** | **Function** |
|---|---|---|---|
| Inlet / Positive | Full pitch | 3-6 | Conveying |
| Positive | Pitch Reduction | 2-3 | Compression |
| Neutral | Mixing discs | 1 | Mixing |
| Positive | Cut flight Reduced Pitch | 2-3 | Mix/Shear/Comp |
| Reverse | Discs/ Cut flight Screw elements | 0.5 - 1 | Shearing |
| Positive | Cut flight Reduced Pitch or Reduced pitch | 2-3 | Compression |
| Reverse | Discs/ Cut flight Screw elements | 0.5 - 1 | Shearing |
| Positive | Reduced Pitch | 1 - 3 | Compression |
| Positive | Cone Head if available or Reduced Pitch | 1 | Compression |
| Die (exit) | | | |

The screw configuration shown in Table 1 may be adjusted to accommodate the L:D (Length:Diameter) of the extruder being used.

Typically, water and/or steam and/or liquids are injected as components of the material to be extruded.

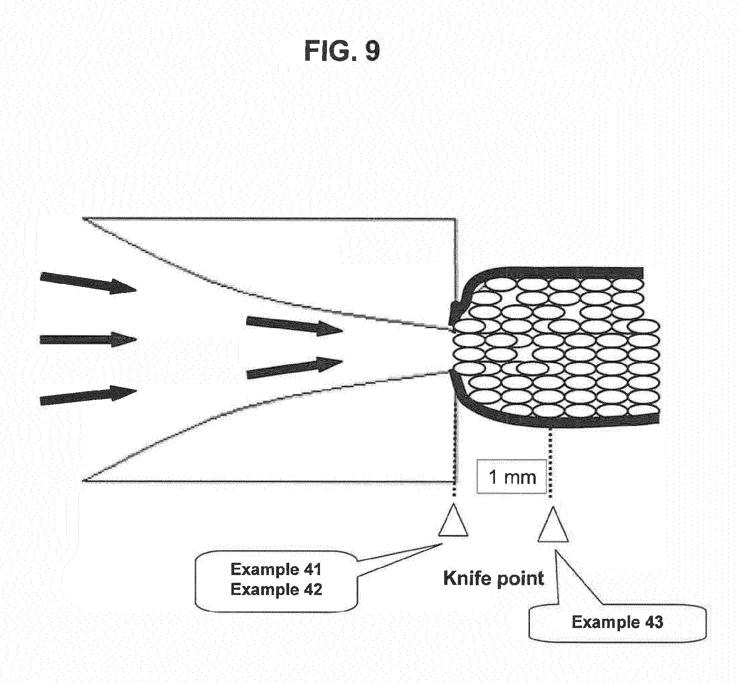

The material to be extruded in apparatus 109 passes through a die to produce an extrudate, which is then cut as shown in FIG. 9. After cutting the amorphous protein extrudate, the extrudate is conveyed to a dryer and dried 111 (FIG 8). Typically, the amorphous protein extrudate is present in the dryer for a time sufficient to provide an extrudate having desired moisture content. This desired moisture content may vary widely depending on the intended application of the extrudate and, typically, is from about 1.0% to about 10.0% by weight. Suitable dryers include those manufactured by CPS-Wolverine (Merrimac, MA), National Drying Machinery Co. (Philadelphia, PA), Wenger (Sabetha, KS) Clextral (Tampa, FL), and Buhler (Switzerland).

The molten extrusion mass/ropes are cut after exiting the die. The apparatus for cutting the extrusion mass includes cutting blades with edges. The edges of the cutting blades are positioned a fixed distance from the die, FIG. 9. A suitable apparatus for cutting the extrudate include flexible knives manufactured by Wenger (Sabetha, KS) and Clextral (Tampa, FL). In one embodiment the edges of the cutting blades are between about 0.2 mm to about 10 mm from the extrusion die face. In another embodiment the edges of the cutting blades are between about 0.5 mm to about 3.0 mm from the extrusion die face. The edges of the cutting blades are positioned at a fixed distance from the surface of the extrusion die face to form the amorphous extrudate. When the molten extrusion mass exits the extruder barrel through the die, superheated water present in the mass flashes off as steam, causing simultaneous expansion (i.e., puffing) of the material. The edges of the cutting blades are positioned at a fixed distance from the surface of the extrusion die face thus, when the expansion of the molten extrusion mass begins, the cutting blades cut into the mass causing disruption of the formation of the internal bubbles (cells). The initial cutting action further causes the mass/rope to break or fracture at different points due to the cutter speed, extrusion flow rate, and viscoelastic properties of the mass (FIG. 9). The simultaneous, or near simultaneous cutting and puffing yield amorphous protein extrudates which present a final product with a natural appearance or non-fabricated final product. The disruption of the internal structure is created when cutters strike the extrudate at or about the time of expansion.

In an optional embodiment, the exiting extrudate may be processed using a suitable apparatus for cutting the extrudate include rigid knives manufactured by Wenger (Sabetha, KS) and Clextral (Tampa, FL).

In another embodiment, the amorphous protein extrudate is not dried.

The amorphous protein extrudates may be further processed by being comminuted after drying to reduce the average particle size of the extrudate. Suitable grinding apparatus include hammer mills such as Mikro Hammer Mills manufactured by Hosokawa Micron Ltd. (England), a Fitzmill (The Fitzpatrick Co., Elmhurst, IL) and roller mills such as those available from Buhler (Switzerland) and CPS-Wolverine (Merrimac, MA).

### Embodiments

A protein extrudate having an amorphous structure, comprising a protein and water, with the extrudate having a density from about 0.02 g/cm³ to about 0.5 g/cm³.

The protein extrudate of the preceding embodiment wherein the protein extrudate has an amorphous external structure and an amorphous internal structure.

The protein extrudate of any of the preceding embodiments wherein the protein is selected from the group consisting of vegetable proteins, soy proteins, dairy proteins, meat proteins, and combinations thereof.

The protein extrudate of any of the preceding embodiments, wherein the extrudate comprises from about 10% by weight to about 90% by weight protein.

The protein extrudate of any of the preceding embodiments wherein the protein extrudate further comprises at least one multigrain component.

The protein extrudate of the preceding embodiment, wherein the at least one multigrain component is selected from the group consisting of whole rice flour, rice flour, whole corn flour, corn flour, whole wheat flour, wheat flour, whole barley flour, barley flour, whole oat flour, oat flour, and combinations thereof.

The protein extrudate of any of the preceding embodiments, wherein the protein is a soy protein.

The protein extrudate of any of the preceding embodiments, further comprising a starch.

The protein extrudate of any of the preceding embodiments wherein the protein extrudate comprises from about 40% by weight to about 75% by weight of a hydrolyzed soy protein, from about 5% by weight to about 15% by weight of an unhydrolyzed soy protein, and from about 15% by weight to about 40% by weight of at least one multigrain component and at least one starch component.

A food product comprising the protein extrudate of any of the preceding embodiments.

The food product of the preceding embodiment wherein the food product is selected from the group consisting of snack foods, bars, granola, trail mix, cold cereals, hot cereals, breading, meat extenders, emulsified meats, ground meats, and combinations thereof.

A method of making an amorphous protein extrudate comprising making a molten mass in an extruder and passing it out of the extrusion die opening in a non-contiguous manner.

A method of making an amorphous protein extrudate comprising making a protein extrudate which passes out of the extrusion die opening and is cut by blades at about the time of expansion.

The method of the preceding embodiment, wherein the blades are at a distance from the extrusion die face.

A method of making a protein extrudate with an amorphous structure comprising: mixing a protein and water in an extruder to form a mixture; pressurizing the mixture in the extruder to a pressure of at least about 200 psi to form a pressurized mixture; heating the pressurized mixture in the extruder to a temperature of at least 80°C. to form a heated and pressurized mixture; extruding the heated and pressurized mixture through an extruder die to a reduced pressure environment to expand the mixture and form an extrudate; cutting the extrudate into a plurality of pieces; and drying the pieces to a water content of from about 1% by weight to about 10% by weight to form the amorphous shaped protein extrudate having a density from about 0.02 g/cm³ to about 0.5 g/cm³ based on the weight of the amorphous protein extrudate and comprising from about 10% by weight to about 90% by weight protein.

### Definitions

To facilitate understanding of the invention several terms are defined below.

The term "amorphous" refers to an extrudate having no definite form.

The term "bar texture" refers to the measurement of the bar texture using a Model TA.TXT2i with a TA-43 knife blade with rounded 3mm end. The parameters are test speed = 1.0 mm/s and distance = 60%. Each bar is bisected by the texture analyzer probe once across the length of the bar.

The term "color value" refers to the color intensity of the amorphous protein extrudate which is be measured using a color-difference meter such as a Hunter Colorimeter, Model D25M-2 (Hunter Associates Lab, Reston VA) to obtain a color L value, a color A value, and a color B value. The specimen cell is filled to the top with the powder to be evaluated. Once the cell is filled, tap lightly to remove air pockets. The read button is pushed and the color values L, a, and b are displayed.

The term "degree of hydrolysis" refers to a sample that is defined as the percentage of cleaved peptide bonds out of the total number of peptide bonds in the sample. Percent (%) degree of hydrolysis is determined from the TNBS value using the following equation: % degree of hydrolysis=((TNBS.sub.value-24)/885).times.100. The value, 24, is the correction for lysyl amino group of a non-hydrolyzed sample and the value, 885, is the moles of amino acid per 100 kg of protein.

The term "extrudate texture" refers to the measurement of the texture of the extrudate, a Model TA-XT2i from Stable Micro Systems, Ltd (Godalming, UK) with 50 kg load cell, a TA-94 Back Extrusion Rig calibrated to 60mm depth, and a 45mm diameter aluminum disc probe are used. This procedure comprises a single controlled force compression step performed on a fixed volume (60 mm) of soy nuggets. Samples are compressed to a maximum force of 50 kg. Plunger travel is calculated by subtracting the height of the plunger at maximum force from the initial height (60mm). Percent Strain (% Strain) is calculated as the depth of penetration divided by the sample height times 100 percent. Percent Strain is inversely proportional to hardness. The probe penetrates the sample to the depth that the 50 kg maximum is reached so that the load cell capacity is never exceeded. All data is recorded by the analyzer so that force at a given depth of penetration can be reported for samples that do no exceed 50 kg at the specified depth of penetration. Using controlled force measurement and reporting % strain provides a more general measurement for a wider range of product hardness under the given set of analysis parameters. Other parameters can be reported from this analysis, such as Dispersion, Total Work, and Work of Recovery. Key factors controlled by the method used herein are: Max force used (50 kg); probe area, sample height & depth (determined by the rig used); and probe speed (1 mm/sec).

The term "moisture content" refers to the amount of moisture in a material. The moisture content of a soy material can be determined by A.O.C.S. (American Oil Chemists Society) Method Ba 2a-38 (1997), which is incorporated herein by reference in its entirety. Moisture content is calculated according to the formula: Moisture content (%) = 100.times.[(loss in mass (grams)/mass of sample (grams)].

The term "nitrogen content" refers to the measurement of the nitrogen content, the sample is determined according to the formula:Nitrogen (%)=1400.67 times [[(Normality of standard acid) times (Volume of standard acid used for sample (ml))]-[(Volume of standard base needed to titrate 1 ml of standard acid minus volume of standard base needed to titrate reagent blank carried through method and distilled into 1 ml standard acid (ml)) times (Normality of standard base)]-[(Volume of standard base used for the sample (ml)) times (Normality of standard base)]]/(Milligrams of sample). The protein content is 6.25 times the nitrogen content of the sample for soy protein.

The term "non-contiguous" refers to the intermittent or disrupted extrusion of the extrudate by the extruder.

The term "protein content" refers to the Nitrogen-Ammonia-Protein Modified Kjeldahl Method of A.O.C.S. Methods Bc4-91 (1997), Aa 5-91 (1997), and Ba 4d-90(1997) which can be used to determine the protein content of a soy material sample.

The term "TNBS" refers to the measurement wherein Trinitrobenzene sulfonic acid (TNBS) reacts under controlled conditions with the primary amines of proteins to produce a chromophore, which absorbs light at 420 nm. The intensity of color produced from the TNBS-amine reaction is proportional to the total number of amino terminal groups and therefore is an indicator of the degree of hydrolysis of a sample. Such measurement procedures are described, for example, by Adler-Nissen in J. Agric. Food Chem., Vol. 27(6), p. 1256 (1979).

The following examples are used herein to illustrate different aspects of this invention and are not meant to limit the present invention in any way. It should be appreciated by those skilled in the art that the techniques disclosed in the examples that follow represent techniques discovered by the inventors to function well in the practice of the invention. However, those skilled in the art should, in light of the present disclosure, appreciate that many changes can be made in the specific embodiments that are disclosed and still obtain a like or similar result without departing from the spirit and scope of the invention, therefore all matter set forth or shown in the application is to be interpreted as illustrative and not in a limiting sense.

### EXAMPLES

### Processes

There are two processes used to produce the amorphous protein extrudates of the present invention. These are described in Example 1 wherein the extrudate exiting the die opening is non-contiguous and Example 13 wherein the extrudate is disrupted by the cutter at about the time of expansion.

### Example 1 - Amorphous Protein Extrudate

The following example relates to a method for forming an amorphous protein extrudate wherein the extrudate exiting the die opening is non-contiguous. Table 1 lists the ingredients used in Example 1.

**Table 2 - Formulation for Example 1**

| **Ingredients** | **% (by weight of the dry blend)** |
|---|---|
| Isolated Soy Protein | 79.0 |
| Whey Protein Concentrate | 20.0 |
| Lecithin | 0.5 |
| Dicalcium Phosphate | 0.5 |
| **Total** | **100.0** |

The ingredients were mixed in a blender for about 20-30 minutes to ensure uniform distribution and form a dry blend. The dry blend was then fed to the extruder hopper and fed to the preconditioner at 55 kg/hr. Steam was added at 5% by weight of the dry blend into the preconditioner. The preconditioned mixture was then introduced into a Wenger Magnum TX52 extruder and processed according to the following conditions.

**Table 3 - Processing Conditions for Example 1**

| | |
|---|---|
| Extruder Motor Load (%) | 33 |
| Dry Formula Feed Rate Set Point (kg/hr) | 55 |
| Preconditioner Steam (kg/hr) | 1 |
| Preconditioner Water (kg/hr) | 6 |
| Extruder Water (kg/hr) | 4 - 6 |
| Extruder Speed (RPM) | 440 - 460 |
| Knife Speed (RPM) | 425 - 720 |
| Down Spout Temperature (°C) | 45 - 55 |
| Zone 1 Barrel Temperature (°C) | 45 - 50 |
| Zone 2 Barrel Temperature (°C) | 63- 76 |
| Zone 3 Barrel Temperature (°C) | 81 - 86 |
| Zone 4 Barrel Temperature (°C) | 81 - 86 |
| Specific Mechanical Energy (kW*h/ton (kilowatt hours/ton)) | 142 - 148 |
| Cone Head Pressure (psig) | 374 - 398 |

The amorphous protein extrudates were then dried in a Proctor Dryer at 121°C (250°F) for 23 minutes. An amorphous protein extrudate with a moisture percentage of between 2.21% to 1.88% was produced.

The results were amorphous protein extrudates that did not require further processing. The amorphous protein extrudates had an amorphous internal and external structure. The internal structure had varied internal air pockets of varying size dispersed randomly through the extrudate nugget, FIG.1. This amorphous external and internal appearance creates a unique non-fabricated and more natural appearance for the finished product. The amorphous protein extrudates can be incorporated into final food products such as bars, cookies, clusters, and cereal.

### Examples 2 - 12 are directed to the process disclosed in Example 1.

The process disclosed in Example 1 was followed except that the following conditions Tables 4 - 8 were applied for Examples 2-12.

Examples were air conveyed to a Proctor continuous dryer set at 121°C (250°F) temperature and about 24 minutes residence time to achieve less than 6% moisture.

Table 4 lists the ingredients for Examples 2-4 and Table 5 gives the processing conditions for Examples 2-4.

Example 2 and Example 4 were not dried.

**Table 7 - Formulation for Examples 2-4**

| **Ingredients** | **Example 2 (% by weight)** | **Example 3 (% by weight)** | **Example 4 (% by weight)** |
|---|---|---|---|
| Hydrolyzed ISP | 92.0 | 68.8 | 75.0 |
| Tapioca Starch | 6.8 | 0.0 | 8.8 |
| Dicalcium phosphate | 0.5 | 0.5 | 0.5 |
| Lecithin | 0.7 | 0.7 | 0.7 |
| SPC | 0.0 | 15 | 0.0 |
| Pea Protein Isolate | 0.0 | 15 | 0.0 |
| Wheat Gluten | 0.0 | 0.0 | 15.0 |
| **Total** | **100.0** | **100.0** | **100.0** |

**Table 8 -Processing Conditions for Examples 2-4**

| **Parameters** | **Example 2** | **Example 3** | **Example 4** |
|---|---|---|---|
| Extruder Motor Load (%) | 32-33 | 30 | 33 |
| Dry Formula Feed Rate (kg/hr) | 59-60 | 60 | 59 |
| Preconditioner Steam (kg/hr) | 1 | 1 | 1 |
| Preconditioner Water (kg/hr) | 5 | 5 | 6 |
| Extruder Water (kg/hr) | 3 | 8 | 5 |
| Extruder Speed (RPM) | 401 | 450 | 450 |
| Knife Speed (RPM) | 1847 | 1333 | 425-720 |
| Down Spout Temperature (°C) | 44-46 | 49 | 50 |
| Zone 1 Barrel Temperature (°C) | 49-53 | 48-49 | 48 |
| Zone 2 Barrel Temperature (°C) | 72-75 | 63-67 | 63-76 |
| Zone 3 Barrel Temperature (°C) | 79-81 | 81 | 81 |
| Zone 4 Barrel Temperature (°C) | 85 | 85-86 | 81-86 |
| Specific Mechanical Energy (kWh/ton) | 121 | 126-130 | 142-148 |
| Cone Head Pressure (psig) | 325-335 | 455-462 | 374-398 |

The amorphous protein extrudates were then dried in a Proctor Dryer at a temperature of 121°C (250°F) for 16 minutes.

The amorphous protein extrudates had an amorphous internal and external structure. The internal structure had varied internal air pockets of varying size dispersed randomly through the amorphous protein extrudate. This amorphous external and internal appearance created a unique non-fabricated and more natural appearance for the finished product. Table 6 gives the results for Examples 2-4. The amorphous protein extrudates can be incorporated into final food products such as bars, cookies, clusters, cereal, etc.

**Table 6 Physical and Chemical Results for Examples 2-4**

| **Properties** | **Example 2** | **Example 3** | **Example 4** |
|---|---|---|---|
| Dry Bulk Density g/cc | 0.0730 | 0.3311 | 0.0357 |
| Color L Hunter | 47.87 | 50.33 | 44.58 |
| Color A Hunter | 2.28 | 5.48 | 1.55 |
| Color B Hunter | 14.79 | 20.79 | 14.17 |
| Moisture % | 3.2 | 4.2 | 4.3 |

Table 7 lists the ingredients for Examples 5-12, while Table 8 gives the processing conditions for Examples 5 - 12.

**Table 7 - Formulations for Examples 5 -12**

| **Ingredients** | **Example 5** | **Example 6** | **Example 7** | **Example 8** | **Example 9** | **Example 10** | **Example 11** | **Example 12** |
|---|---|---|---|---|---|---|---|---|
| Hyd rolyzed ISP | 98.8 | 48.8 | 78.8 | 50.8 | 78.8 | 58.1 | 0.0 | 88.5 |
| SPC | 0.0 | 25.0 | 0.0 | 0.0 | 0.0 | 0.0 | 0.0 | 0.0 |
| Wheat Gluten | 0.0 | 0.0 | 0.0 | 0.0 | 20 | | | |
| Pea Protein Isolate | 0.0 | 25.0 | 0.0 | 0.0 | 0.0 | 40.0 | 97.5 | 0.0 |
| Unhydrolyzed ISP | 0.0 | 0.0 | 20 | 40.0 | 0.0 | 0.0 | 0.0 | 0.0 |
| Fiber | 0.0 | 0.0 | 0.0 | 0.0 | 0.0 | 0.0 | 0.0 | 10.0 |
| Tapioca Starch | 0.0 | 0.0 | 0.0 | 8.0 | 0.0 | 0.0 | 0.0 | 0.0 |
| Dicalcium Phosphate | 0.5 | 0.5 | 0.5 | 0.5 | 0.5 | 0.5 | 1.0 | 0.5 |
| Lecithin | 0.7 | 0.7 | 0.7 | 0.7 | 0.7 | 1.4 | 1.5 | 1.0 |
| **Total** | **100.00** | **100.00** | **100.00** | **100.00** | **100.00** | **100.00** | **100.00** | **100.00** |

**Table 8 Processing Conditions for Examples 5 - 12**

| **Parameters** | **Example 5** | **Example 6** | **Example 7** | **Example 8** | **Example 9** | **Example 10** | **Example 11** | **Example 12** |
|---|---|---|---|---|---|---|---|---|
| Extruder Motor Load (%) | 32 | 31 - 32 | 37 | 29 - 31 | 36 | 33 | 31 - 34 | 31 |
| Dry Formula Feed Rate (kg/hr) | 68 | 67 - 70 | 69 | 54 | 59 | 56 - 60 | 56 - 61 | 57 |
| Preconditioner Steam (kg/hr) | 2 | 2 | 2 | 1 | 1 | 1 | 1 | 1 |
| Preconditioner Water (kg/hr) | 3 | 3 | 3 | 2 | 5 | 2 | 3 | 2 |
| Extruder Water (kg/hr) | 6 | 10 | 6 | 5 - 6 | 4 | 7 | 16 | 8 |
| Extruder Speed (RPM) | 350 | 350 | 350 | 350 | 400 | 400 | 400 | 400 |
| Knife Speed (RPM) | 3140 | 1632 | 1600 | 1600 | 1600 | 1195 | 1600 | 2752 |
| Down Spout Temperature (°C) | 44 | 46 | 44 | 45 | 47 | 47 | 37 - 40 | 49 |
| Zone 1 Barrel Temperature (°C) | 66 | 64 - 76 | 67 | 64 - 68 | 76 | 64 - 75 | 68 - 75 | 64 |
| Zone 2 Barrel Temperature (°C) | 88 | 71 - 81 | 87 | 76 - 77 | 73 | 72 - 79 | 71 - 80 | 81 |
| Zone 3 Barrel Temperature (°C) | 87 | 80 | 85 | 81 - 83 | 82 | 81 - 83 | 79 - 80 | 81 |
| Zone 4 Barrel Temperature (°C) | 89 | 83 - 84 | 75 | 74 | 72 | 76 | 79 - 80 | 79 |
| Specific Mechanical Energy (kWh/ton) | 97 | 90 - 93 | 104 | 106 | 137 | 131 - 133 | 129 - 133 | 127 |
| Cone Head Pressure (PSIG) | 475 | 867 - 880 | 658 | 497 - 510 | 487 | 433 - 454 | 1082 - 1238 | 430 |

**Table 9: Physical and Chemical Results for Examples 5 -12**

| **Properties** | **Example 5** | **Example 6** | **Example 7** | **Example 8** | **Example 9** | **Example 10** | **Example 11** | **Example 12** |
|---|---|---|---|---|---|---|---|---|
| Dry Bulk Density g/cc | 0.0561 | 0.3273 | 0.0785 | 0.0657 | 0.0327 | 0.0624 | 0.2506 | 0.0298 |
| Color L Hunter | 51.42 | 48.71 | 46.24 | 44.43 | 44.83 | 44.82 | 60.49 | 47.20 |
| Color A Hunter | 1.80 | 5.17 | 2.55 | 3.54 | 4.37 | 3.06 | 3.20 | 2.15 |
| Color B Hunter | 14.87 | 19.59 | 14.33 | 14.66 | 14.90 | 14.75 | 21.42 | 15.42 |
| Moisture % | 8.42 | 6.70 | 8.27 | 5.97 | 7.58 | 9.97 | 3.23 | 10.14 |

### Example 13 - Amorphous Protein Extrudates

The following example relates to a method for forming an amorphous protein extrudate wherein the extrudate is disrupted by the cutter at about the time of expansion. In this particular example, the amorphous protein extrudate produced is a multigrain amorphous protein extrudate. Table 10 is a list of ingredients for Example 13.

**Table 10 - Formulation for Example 13**

| **Ingredients** | **% by weight** |
|---|---|
| Hydrolyzed ISP | 54.4 |
| Unhydrolyzed ISP | 13.6 |
| Rice Flour | 11.7 |
| Corn Flour | 10.0 |
| Barley Flour | 10.0 |
| Lecithin | 0.3 |
| **Total** | **100.0** |

The ingredients were mixed in a blender until uniformly distributed to form a dry feed mixture. The dry feed mixture was then conveyed to a Wenger Magnum TX52 extruder and processed according to the following conditions. Table 11 gives the processing conditions for Example 13.

**Table 11 - Processing Conditions for Example 13**

| | |
|---|---|
| Extruder Motor Load (%) | 24-30 |
| Dry Formula Feed Rate (kg/hr) | 59-67 |
| Preconditioner Steam (kg/hr) | 0 |
| Preconditioner Water (kg/hr) | 4 - 6 |
| Extruder Water (kg/hr) | 10 - 12 |
| Extruder Speed (RPM) | 250 - 300 |
| Knife Speed (RPM) | 2500 - 3000 |
| Down Spout Temperature (°C) | 28 - 30 |
| Zone 1 Barrel Temperature (°C) | 63-74 |
| Zone 2 Barrel Temperature (°C) | 70-77 |
| Zone 3 Barrel Temperature (°C) | 77 - 82 |
| Zone 4 Barrel Temperature (°C) | 78-80 |
| Specific Mechanical Energy (kWh/ton) | 64-67 |
| Cone Head Pressure (psig) | 123 -125 |

The molten mass produced according to the processing in Table 11. The cutting apparatus used was a typical cutting apparatus currently used in the industry with six knife blades rotating at 2500-3000 RPM. The edge of each of the cutting blades was set at a distance of 1.0 mm from the die face. This distance created the disruption of the extrudate. This cutting into the extrudate creates the amorphous protein extrudate.

The amorphous protein extrudates were then dried in a Proctor Dryer at a temperature of 127°C (260°F) for 16 minutes. An amorphous protein extrudate with a moisture content of 1.1% was produced.

The results were amorphous protein extrudates that did not require further processing. The amorphous protein extrudates had an amorphous internal and external structure. The internal structure had varied internal air pockets of varying size dispersed randomly through the extrudate, FIG. 2. This amorphous external and internal appearance creates a unique non-fabricated and more natural appearance for the finished product. The amorphous protein extrudates can be incorporated into final food products such as bars, cookies, clusters, cereal, etc.

### Examples 14-53

Examples 14-53 were produced using the process disclosed in Example 13. Table 12 is a list of the ingredients for Examples 14-20.

**Table 13. Formulations for Examples 14-20**

| **Ingredients** | **Example 14 (% by weight)** | **Example 15 (% by weight)** | **Example 16 (% by weight)** | **Example 17 (% by weight)** | **Example 18 (% by weight)** | **Example 19 (% by weight)** | **Example 20 (% by weight)** |
|---|---|---|---|---|---|---|---|
| Hydrolyzed ISP | 54.4 | 54.4 | 54.4 | 54.4 | 54.4 | 54.4 | 54.4 |
| Unhydrolyzed ISP | 13.6 | 13.6 | 13.6 | 13.6 | 13.6 | 13.6 | 13.6 |
| Rice Flour | 12.0 | 11.7 | 11.7 | 0.0 | 11.7 | 11.7 | 0.0 |
| Corn Flour | 11.4 | 10.0 | 0.0 | 11.7 | 10.0 | 10.0 | 0.0 |
| Whole Oat Flour | 8.3 | 5.0 | 10.0 | 10.0 | 0.0 | 10.0 | 20.0 |
| Barley Flour | 0.0 | 5.0 | 10.0 | 10.0 | 10.0 | 0.0 | 11.7 |
| Lecithin | 0.3 | 0.3 | 0.3 | 0.3 | 0.3 | 0.3 | 0.3 |
| **Total** | **100.0** | **100.0** | **100.0** | **100.0** | **100.0** | **100.0** | **100.0** |

**Table 14 Extrusion Parameters for Examples 21 - 27**

| **Parameters** | **Example 21** | **Example 22** | **Example 23** | **Example 26** | **Example 24** | **Example 27** | **Example 25** |
|---|---|---|---|---|---|---|---|
| Extruder Motor Load (%) | 24 - 30 | 25 - 29 | 26 - 27 | 25 | 25 | 24 - 26 | 25 - 27 |
| Dry Formula Feed Rate (kg/hr) | 59 - 67 | 56 - 60 | 58 - 61 | 60 -61 | 58 - 59 | 58 - 63 | 60 - 63 |
| Preconditioner Steam (kg/hr) | 0 | 0 | 0 | 0 | 0 | 0 | 0 |
| Preconditioner Water (kg/hr) | 5 | 5 | 5 | 6 | 5 | 5 | 5 |
| 50/50 Brown Rice Syrup/Water (BRS/Water) (kg/hr) | 0.0 | 0.0 | 0 | 3.6 | 0 | 3.6 | 0 |
| Extruder Water (kg/hr) | 11 | 11 | 16 | 10 | 15 | 10 | 16 |
| Extruder Speed (RPM) | 270 | 320 | 350 | 350 | 350 | 350 | 350 |
| Knife Speed (RPM) | 2999 | 3200 | 3200 | 3200 | 3200 | 3200 | 3200 |
| Down Spout Temperature (°C) | 29 | 30 | 31 | 32 | 33 | 33 | 30 |
| Zone 1 Barrel Temperature (°C) | 63 - 74 | 65 - 75 | 64-72 | 69-74 | 64-71 | 64-75 | 63 |
| Zone 2 Barrel Temperature (°C) | 70 - 77 | 66 - 76 | 70 - 77 | 65-71 | 73 - 77 | 68-77 | 75 - 76 |
| Zone 3 Barrel Temperature (°C) | 77 - 82 | 78 - 81 | 79 | 78 - 81 | 78 - 80 | 78 - 80 | 79 - 82 |
| Zone 4 Barrel Temperature (°C) | 78 - 80 | 78 - 81 | 78 - 81 | 77-83 | 78 - 81 | 78 - 80 | 79 - 81 |
| Specific Mechanical Energy (kWh/ton) | 64 - 67 | 77 - 85 | 85-93 | 79-85 | 82 | 82-88 | 87 - 90 |
| Cone Head Pressure (psig) | 123 - 125 | 121 - 133 | 683-754 | 588-616 | 538-624 | 540-576 | 590 - 617 |

The gap between the blades and die face was maintained constant at about 1.0mm for Examples 21-34.

In Table 14,above, Examples 21 and 22 were produced using the formulation from Example 14. Example 21 and 22 were produced with a die with three round holes 2.0 mm in diameter. Further, in Examples 21 and 22 the cutter blades were set at about 1.0 mm gap between the blades and extrusion die face. Examples 23 and 26 were produced using the formulation from Example 15. Examples 24 and 27 were produced using the formulation from Example 16. Examples 25 was produced using the formulation from Example 17. For Examples 26 and 27: 3% brown rice syrup was incorporated into extruder barrel. Brown rice syrup was incorporated in the first section of extruder barrel at 6% addition (50/50 brown rice syrup/water solution); a peristaltic pump was used.

In Table 15, below, Example 28 was produced using the formulation from Example 17. For Example 28: 3% brown rice syrup was incorporated into extruder barrel. Brown rice syrup was incorporated in the first section of extruder barrel at 6% addition (50/50 brown rice syrup/water solution); a peristaltic pump was used. Examples 29 and 32 were produced using the formulation from Example 18. Examples 29-31 were dried using a continuous dryer at 127°C (260°F). Examples 30 and 33 were produced using the formulation from Example 19. Examples 31 and 34 were produced using the formulation from Example 20. Examples 32-34 were dried using a tray dryer at 141°C - 149°C (285°F - 300°F).

**Table 15 Extrusion Parameters for Examples 28 - 34**

| **Parameters** | **Example 28** | **Example 29** | **Example 30** | **Example 32** | **Example 31** | **Example 34** | **Example 33** |
|---|---|---|---|---|---|---|---|
| Extruder Motor Load (%) | 23 - 30 | 24 - 26 | 25 - 27 | 23 - 24 | 23 - 27 | 23-24 | 23-30 |
| Dry Formula Feed Rate (kg/hr) | 52 - 66 | 56 - 59 | 60 - 63 | 55 - 59 | 57 - 66 | 51 - 60 | 52-66 |
| Preconditioner Steam kg/hr | 0 | 0 | 0 | 0 | 0 | 0 | 0 |
| Preconditioner Water kg/hr | 5 | 5 | 5 | 5 | 5 | 5 | 5 |
| 50/50 BRS/Water (kg/hr) | 3.6 | 0 | 0 | 3.6 | 0 | 3.6 | 3.6 |
| Extruder Water kg/hr | 11 | 17 | 16 | 12 | 15 | 10 | 11 |
| Extruder Speed (RPM) | 350 | 350 | 350 | 350 | 350 | 350 | 350 |
| Knife Speed (RPM) | 3200 | 3200 | 3200 | 3200 | 3200 | 3200 | 3200 |
| Down Spout Temperature (°C) | 31 | 31 | 30 | 32 | 32 | 32 | 31 |
| Zone 1 Barrel Temperature (°C) | 64 - 75 | 66 - 68 | 63 | 265 - 74 | 63 - 76 | 66 - 75 | 64-75 |
| Zone 2 Barrel Temperature (°C) | 67 - 72 | 78 - 82 | 75-76 | 63 - 72 | 60 - 79 | 63 - 73 | 67-72 |
| Zone 3 Barrel Temperature (°C) | 79 - 80 | 78 - 82 | 79-82 | 80 - 81 | 77 - 83 | 81 - 82 | 79-80 |
| Zone 4 Barrel Temperature (°C) | 79 - 80 | 79 - 81 | 79-81 | 79-81 | 76 - 84 | 79 - 80 | 79-80 |
| Specific Mechanical Energy (kWh/ton) | 85 - 92 | 80 - 82 | 87-90 | 81 - 87 | 80 - 87 | 81 - 85 | 85-92 |
| Cone Head Pressure (psig) | 584 - 597 | 517 - 602 | 590-617 | 504 - 524 | 419 - 495 | 472 - 509 | 584-597 |

**Table 16. Physical and Chemical Results for Examples 21 - 27**

| **Properties** | **Example 21** | **Example 22** | **Example 23** | **Example 24** | **Example 25** | **Example 26** | **Example 27** |
|---|---|---|---|---|---|---|---|
| Dry Bulk Density g/cc | 0.3028 | 0.2391 | 0.2399 | 0.2370 | 0.2320 | 0.2523 | 0.2617 |
| Color L Hunter | 62.17 | 61.75 | 54.73 | 54.93 | 52.74 | 44.56 | 42.49 |
| Color A Hunter | 2.28 | 2.38 | 3.20 | 2.94 | 2.95 | 7.16 | 8.12 |
| Color B Hunter | 19.89 | 17.48 | 19.88 | 19.21 | 18.99 | 19.77 | 19.71 |
| Moisture % | 1.90 | 1.96 | 2.25 | 2.54 | 2.29 | 3.44 | 1.76 |

In Table 16,above, Examples 21 and 22 were produced using the formulation from Example 14. Examples 23 and 26 were produced using the formulation from Example 15. Examples 24 and 27 were produced using the formulation from Example 16. Examples 25 was produced using the formulation from Example 17.

In Table 17, below, Example 28 was produced using the formulation from Example 17. Examples 29 and 32 were produced using the formulation from Example 18. Examples 30 and 33 were produced using the formulation from Example 19. Examples 31 and 34 were produced using the formulation from Example 20.

**Table 17. Physical and Chemical Results for Examples 28 - 34**

| **Properties** | **Example 28** | **Example 29** | **Example 30** | **Example 31** | **Example 32** | **Example 33** | **Example 34** |
|---|---|---|---|---|---|---|---|
| Dry Bulk Density g/cc | 0.2311 | 0.2277 | 0.2378 | 0.2604 | 0.2386 | 0.2677 | 0.2607 |
| Color L Hunter | 48.13 | 53.63 | 53.59 | 53.58 | 46.57 | 44.95 | 45.57 |
| Color A Hunter | 5.61 | 3.25 | 3.23 | 2.51 | 7.02 | 6.60 | 5.89 |
| Color B Hunter | 20.36 | 17.48 | 19.82 | 18.32 | 17.48 | 20.02 | 30.39 |
| Moisture % | 3.14 | 2.39 | 2.33 | 2.32 | 2.21 | 2.02 | 2.13 |

**Table 18 Formulations for Examples 35-37**

| **Ingredients** | **Example 35** | **Example 36** | **Example 37** |
|---|---|---|---|
| Hydrolyzed ISP | 0.0 | 0.0 | 33.1 |
| Unhydrolyzed ISP | 99.2 | 0.0 | 0.0. |
| SPC | 0.0 | 0.0 | 33.1 |
| Wheat Gluten | 0.0 | 99.2 | 33.0 |
| Corn flour | 0.0 | 0.0 | 0.0 |
| Tapioca Starch | 0.0 | 0.0 | 0.0 |
| Lecithin | 0.3 | 0.3 | 0.3 |
| Calcium Carbonate | 0.5 | 0.5 | 0.5 |
| **Total** | **100.0** | **100.0** | **100.0** |

**Table 19 Processing Conditions for Examples 35-37**

| **Parameters** | **Example 35** | **Example 36** | **Example 37** |
|---|---|---|---|
| Extruder Motor Load (%) | 36 - 40 | 35 - 36 | 25 - 26 (%) |
| Dry Formula Feed Rate | 56 - 60 kg/hr | 57 - 58 kg/hr | 54 - 60 kg/hr |
| Preconditioner Steam | 5 kg/hr | 3 kg/hr | 3 kg/hr |
| Preconditioner Water | 6 kg/hr | 10 kg/hr | 10 kg/hr |
| Extruder Water | 23 kg/hr | 3 kg/hr | 17 kg/hr |
| Extruder Speed | 370 (RPM) | 400 (RPM) | 400 (RPM) |
| Knife Speed | 3000 (RPM) | 500 (RPM) | 2000 (RPM) |
| Down Spout Temperature | 78 (°C) | 47 (°C) | 50 (°C) |
| Zone 1 Barrel Temperature | 64 - 74 (°C) | 62 - 76 (°C) | 68 - 78 (°C) |
| Zone 2 Barrel Temperature | 60 - 74 (°C) | 61 - 80 (°C) | 59 - 80 (°C) |
| Zone 3 Barrel Temperature | 78 - 81 (°C) | 98 - 100 (°C) | 99 - 101 (°C) |
| Zone 4 Barrel Temperature | 69 - 96 (°C) | 99 (°C) | 72 - 73 (°C) |
| Specific Mechanical Energy | 132 - 141 kWh/ton | 133 - 141 kWh/ton | 94 - 109 kWh/ton |
| Cone Head Pressure | 569 - 727 (PSI) | 1121 - 1128 (PSI) | 626 - 645 (PSI) |

**Table 20 Physical and Chemical Results for Examples 35-37**

| **Properties** | **Example 35** | **Example 36** | **Example 37** |
|---|---|---|---|
| Dry Bulk Density g/cc | 0.1836 | 0.2299 | 0.3371 |
| Color L Hunter | 50.87 | 48.98 | 62.22 |
| Color A Hunter | 2.58 | 4.30 | 1.80 |
| Color B Hunter | 18.38 | 18.68 | 19.02 |
| Moisture % | 1.8 | 1.55 | 1.39 |

### Example 38 Amorphous Protein Extrudate Containing 40% Protein

Example 38 was produced using the process of Example 13.

**Table 21. Formulations for Example 38**

| **Ingredients** | **38 (%by weight)** |
|---|---|
| Hydrolyzed ISP | 34.5 |
| Unhydrolyzed ISP | 11.5 |
| Rice Flour | 15.0 |
| Whole Oat Flour | 10.0 |
| Barley Flour | 15.0 |
| Corn Flour | 13.7 |
| Lecithin | 0.3 |
| **Total** | **100.0** |

Three samples were produced with the formulation on Table 21. Samples were produced at different bulk density. Barrel water and extruder screw speed were used to modify sample's bulk density.

**Table 22 Processing Conditions for Examples 38A - 38C**

| **Parameters** | **38A** | **38B** | **38C** |
|---|---|---|---|
| Extruder Motor Load (%) | 26 - 28 | 23 - 25 | 19 |
| Dry Formula Feed Rate (kg/hr) | 58 - 61 | 60 - 62 | 57 - 60 |
| Preconditioner Steam (kg/hr) | 0 | 0 | 0 |
| Preconditioner Water (kg/hr) | 6 | 6 | 6 |
| Extruder Water (kg/hr) | 15 | 17.2 | 24 |
| Extruder Speed (RPM) | 350 | 330 | 280 |
| Knife Speed (RPM) | 3200 | 3200 | 3200 |
| Down Spout Temperature (°C) | 27 | 29 | 30 |
| Zone 1 Barrel Temperature (°C) | 67 - 75 | 68 - 73 | 67 - 74 |
| Zone 2 Barrel Temperature (°C) | 64 - 74 | 66 - 72 | 62 - 72 |
| Zone 3 Barrel Temperature (°C) | 78 - 80 | 77 - 82 | 79 - 80 |
| Zone 4 Barrel Temperature (°C) | 77 | 80 | 79 - 80 |
| Specific Mechanical Energy kWh/ton | 89 - 92 | 70 - 79 | 50 - 51 |
| Cone Head Pressure (psig) | 790 - 829 | 782 - 854 | 846 - 865 |

**Table 23. Physical and Chemical Results for Examples 38A-38C**

| **Sample #** | **38A** | **38B** | **38C** |
|---|---|---|---|
| Density g/cc | 0.2437 | 0.2808 | 0.3072 |
| Color L Hunter | 56.03 | 53.86 | 51.12 |
| Color A Hunter | 3.56 | 3.69 | 3.73 |
| Color B Hunter | 20.37 | 19.98 | 19.03 |
| Moisture % | 2.29 | 2.62 | 2.90 |

### Examples 39 and 40 Amorphous Protein Extrudates Containing Cocoa Powder

Example 39 is to a 60% protein extrudate containing 5% cocoa powder. Example 40 is to an 80% protein extrudate containing 5% cocoa powder. Examples 39 and 40 were produced using the process of Example 13.

**Table 24 Formulations for Examples 39 and 40**

| **Ingredients** | **39 (% by weight)** | **40 (% by weight)** |
|---|---|---|
| Hydrolyzed ISP | 60.0 | 91.0 |
| Unhydrolyzed ISP | 8.0 | -- |
| Rice Flour | 9.0 | -- |
| Oat Flour | 9.0 | -- |
| Barley Flour | 9.0 | -- |
| Cocoa Powder | 5.0 | 5.0 |
| Tapioca Starch | -- | 4.0 |
| **Total** | **100.0** | **100.0** |

Examples 39A and 39B and Examples 40A and 40B differ in processing conditions as shown in Table 25, below.

**Table 25 Extrusion Parameters for Examples 39A, 39B, 40A, and 40B**

| **Parameters** | **39A** | **39B** | **40A** | **40B** |
|---|---|---|---|---|
| Extruder Motor Load | 26 % | 21 - 22 % | 18 % | 16 % |
| Dry Formula Feed Rate | 58 - 62 kg/hr | 58 - 66 kg/hr | 57 - 59 kg/hr | 56 - 59 kg/hr |
| Preconditioner Steam | 3 kg/hr | 3 kg/hr | 4 kg/hr | 4 kg/hr |
| Preconditioner Water | 6 kg/hr | 6 kg/hr | 6 kg/hr | 6 kg/hr |
| Extruder Water | 15 kg/hr | 20 kg/hr | 20 kg/hr | 24 kg/hr |
| Extruder Speed | 350 RPM | 350 RPM | 350 RPM | 350 RPM |
| Knife Speed | 3200 RPM | 3200 RPM | 3100 RPM | 3100 RPM |
| Down Spout Temperature | 37°C | 40°C | 54°C | 55°C |
| Zone 1 Barrel Temperature | 64 - 75°C | 64 - 71°C | 64 - 76°C | 65 - 73°C |
| Zone 2 Barrel Temperature | 64 - 70°C | 61 - 76°C | 62 - 76°C | 62 - 78°C |
| Zone 3 Barrel Temperature | 79 - 81°C | 78 - 81°C | 85 - 92°C | 87 - 91°C |
| Zone 4 Barrel Temperature | 79 - 80°C | 78 - 80°C | 95 - 98°C | 94 - 103°C |
| Specific Mech. Energy) | 86 - 90 kWh/ton | 67-75 kWh/ton | 57 - 63 kWh/ton | 53 - 59 kWh/ton |
| Cone Head Pressure | 500 - 527 psig | 407 - 455 psig | 272 - 301 psig | 229 - 235 psig |

**Table 26. Physical and Chemical Results for Examples 39A, 39B, 40A, and 40B**

| **Properties** | | **39A** | **39B** | **40A** | **40B** |
|---|---|---|---|---|---|
| Density g/cc | | 0.2655 | 0.2703 | 0.2435 | 0.2992 |
| Color Hunter | L | 22.14 | 20.92 | 19.49 | 17.94 |
| Color Hunter | A | 1.76 | 1.55 | 1.35 | 1.15 |
| Color Hunter | B | 4.30 | 3.70 | 3.17 | 2.56 |
| Moisture % | | 2.35 | 2.60 | 3.19 | 5.64 |

### Examples 41-43 Standard Nuggets versus Amorphous Protein Extrudate

Examples were produced using the same formulation and extrusion set up; with differences on cutter set up FIG. 8 (without gap Examples 41 and 42 and with gap, Example 43) to explain the Disruption of the bubble rope during expansion.

Example 41 blades in contact with die face at 2000 rpm cutter speed.

Example 42 blades in contact with die face at 3200 rpm cutter speed.

Example 43 1.0 mm gap between blades and die face at 3200 rpm cuter speed. (Process disclosed in Example 13)

**Table 27 Formulation: Examples 41-43**

| **Ingredients:** | **%** |
|---|---|
| Hydrolyzed ISP | 54.4 |
| Unhydrolyzed ISP | 13.6 |
| Rice Flour | 11.7 |
| Oat Flour | 10.0 |
| Barley Flour | 10.0 |
| Lecithin | 0.3 |
| **Total:** | **100.0** |

The same die was used in Examples 41-43: 2.0 mm diameter round hole.

**Table 30. Processing conditions for Examples 41-43:**

| **Parameters** | **Example 41** | **Example 42** | **Example 43** |
|---|---|---|---|
| Feed rate (kg/hr) | 60 | 60 | 60 |
| Preconditioner water (%) | 10 | 10 | 10 |
| Extruder barrel water (%) | 15 | 15 | 15 |
| Extruder Speed (RPM) | 350 | 350 | 350 |
| Knife speed (RPM) | 2000 | 3200 | 3200 |
| Zone 1 Barrel Temperature (°C) | 70 | 70 | 70 |
| Zone 2 Barrel Temperature (°C) | 70 | 70 | 70 |
| Zone 3 Barrel Temperature (°C) | 80 | 80 | 80 |
| Zone 4 Barrel Temperature (°C) | 80 | 80 | 80 |
| Specific Mechanical Energy (KWh/Ton) | 86 - 99 | 82 - 92 | 80 - 90 |
| Cone Head pressure (psig) | 770 - 810 | 753 - 801 | 758 - 786 |
| Wet bulk density (g/1150 mL) | 232 - 252 | 318 - 348 | 275 - 290 |

**Table 31: Physical and Chemical Results for Examples 41-43**

| **Properties** | **Example 41** | **Example 42** | **Example 43** |
|---|---|---|---|
| Bulk Density g/cc | 0.2077 | 0.2751 | 0.2678 |
| Color L Hunter | 61.33 | 57.95 | 58.18 |
| Color A Hunter | 1.77 | 1.95 | 1.87 |
| Color B Hunter | 18.62 | 18.08 | 18.59 |
| Moisture % | 2.56 | 2.61 | 2.67 |
| Texture travel (mm) | 9.90 | 7.77 | 20.11 |
| Strain % (Travel/Height)^{*}100 | 16.45 | 13.03 | 33.40 |

The Strain for irregular amorphous sample is more than double than standard samples of nuggets using texture analysis.

### Example 44 Beef Patties

**Table 32 Formulations:**

| **Ingredients** | **Test 1 (%)** | **Test 2 (%)** | **Test 3 (%)** | **Test 4 (%)** | **Test 5 (%)** |
|---|---|---|---|---|---|
| Beef 73/27 | 67.5 | 67.5 | 67.5 | 67.5 | 67.5 |
| Water | 21.4 | 21.4 | 21.4 | 21.4 | 21.4 |
| Salt | 0.5 | 0.5 | 0.5 | 0.5 | 0.5 |
| Beef 15/85 | 2.0 | 2.0 | 2.0 | 2.0 | 2.0 |
| Response 4410 | 8.6 | 0.0 | 0.0 | 0.0 | 0.0 |
| Example 35 | 0.0 | 8.6 | 0.0 | 0.0 | 0.0 |
| Example 36 | 0.0 | 0.0 | 8.6 | 0.0 | 0.0 |
| Example 37 | 0.0 | 0.0 | 0.0 | 8.6 | 0.0 |
| Response 4310 | 0.0 | 0.0 | 0.0 | 0.0 | 8.6 |
| **Totals:** | **100.0** | **100.0** | **100.0** | **100.0** | **100.0** |

### Preparation Procedure:

Grind fat and lean meat through ½" (12mm) grinder plate.
Blend all ingredients (with exception of the salt) for 1.5 minutes.
Add salt to the blender and blend for 30 seconds.
Grind mixture through a 1/8" plate.
Form the patties.
Individually quick freeze in preparation for raw frozen storage.

Examples 35, 36 and 38/39 were used to produce beef patties in addition with two typical products used for this application; Response 4410 and Response 4310 (Solae, LLC, St Louis MO).

Response 4410 was used as control and Response 4310 was an additional reference.
Test 1 control - Response 4410, Test 2 - Example 35, Test 3 - Example 36, Test 4 - Example 37 and Test 5 - Response 4310.

**Table 33 Results for Cook Yields from five beef patties:**

| **Characteristics** | **Test 1** | **Test 2** | **Test 3** | **Test 4** | **Test 5** |
|---|---|---|---|---|---|
| Raw weight ground | 332 - 338 | 328 - 330 | 326 - 334 | 328 - 333 | 332 - 336 |
| Cooled weight ground | 255 - 257 | 247 - 249 | 229 - 237 | 234 - 239 | 246 - 249 |
| Average Cooked Yield (%) | 76.420 | 75.030 | 70.432 | 71.060 | 74.102 |
| Standard Deviation | 0.423 | 0.581 | 0.804 | 0.844 | 0.362 |

**Table 34: Proximate Composition Raw Patties**

| **Characteristics** | **Test 1** | **Test 2** | **Test 3** | **Test 4** | **Test 5** |
|---|---|---|---|---|---|
| Moisture % | 64.4 | 64.5 | 63.75 | 64.9 | 64.5 |
| Protein % | 17.9 | 18.2 | 20.4 | 18.9 | 17.9 |
| Fat % | 14.5 | 13.9 | 14.6 | 14.1 | 15.0 |
| Ash % | 1.48 | 1.80 | 1.25 | 1.33 | 1.42 |
| Other %* | 1.8 | 1.6 | 0.0 | 0.77 | 1.18 |
| **Totals:** | **100.0** | **100.0** | **100.00** | **100.00** | **100.00** |

| | | | | | |
|---|---|---|---|---|---|
| * Others includes carbohydrates. | | | | | |

**Table 35: Proximate Composition Cooked Patties**

| **Characteristics** | **Test 1** | **Test 2** | **Test 3** | **Test 4** | **Test 5** |
|---|---|---|---|---|---|
| Moisture % | 59.1 | 59.7 | 56.0 | 58.5 | 58.4 |
| Protein % | 23.1 | 24.2 | 26.8 | 25.4 | 24.0 |
| Fat % | 14.9 | 13.1 | 14.3 | 13.8 | 14.6 |
| Ash % | 1.51 | 1.54 | 1.33 | 1.43 | 1.64 |
| Other%* | 1.39 | 1.46 | 1.57 | 0.87 | 1.36 |
| **Totals:** | **100.00** | **100.00** | **100.00** | **100.00** | **100.00** |

| | | | | | |
|---|---|---|---|---|---|
| * Others includes carbohydrates. | | | | | |

### Example 45. Nutritional Bars:

Formulations and examples from Examples 23, 26, 25, 28, 31 and 34 were used to produce nutritional bars. Also SUPRO® Nuggets 60 was used as control and baseline for this evaluation (seven formulations).

**Table 36: Bar Formulations**

| **Ingredients:** | **% Bar** |
|---|---|
| Corn Syrup | 10.0 |
| Malt Extract | 20.0 |
| Crystalline fructose | 4.9 |
| Sunflower Oil | 4.0 |
| Glycerin | 2.0 |
| Salt | 0.1 |
| Gum Arabic | 2.0 |
| ISP SUPRO® 430 | 7.0 |
| Examples: 23, 26, 25, 28, 31 and 34 or SUPRO®Nuggets 60 (Solae Nuggets) | 50.0 * |
| **Totals:** | **100.0** |

| | |
|---|---|
| *Each sample was used at 50% in formulation to complete all seven bar examples. | |

The bars were tested for maximum force (g) using a texture analyzer TA-XT2i; Texture Technologies Corp. (Scarsdale, New York); to identify the hardness/binding properties in the bars.

**Table 37: Texture force TA results for bar examples in Table 36:**

| **Example used to produce final bars** | **TA Day 1 Force (g)** |
|---|---|
| Example 23 | 28923 |
| Example 26 | 26427 |
| Example 25 | 26407 |
| Example 28 | 19547 |
| Example 31 | 32435 |
| Example 34 | 30271 |
| SUPRO® Nuggets 60 | 8674 |

TA force values showed significant differences between the amorphous products versus the standard nugget in bar application. It can be explain by the nature of the irregular shape which creates better interconnection in the matrix, improves the binding properties and it makes the force values to be higher in the final bar application.

### Additional Nutritional Bar Example:

SUPRO® Nuggets 173 is the commercial product similar as described in Example 16.

**Table 38: Formulation:**

| **Ingredients:** | **%** |
|---|---|
| Date Paste | 5.0 |
| Xanthan Gum | 0.7 |
| Corn Syrup 42/43 | 20.7 |
| Fruit Preserve | 4.0 |
| Citric Acid | 0.1 |
| Vanilla Extract | 0.6 |
| Flavor | 0.7 |
| Honey | 7.0 |
| SUPRO® Nuggets 173 | 36.2 |
| Example 16 | |
| SUPRO® 430 ISP | 5.0 |
| Oat Syrup Solids | 1.0 |
| Sliced Natural Almonds | 4.0 |
| Dried Fruit | 10.0 |
| Yogurt Coating | 5.0 |
| **Total** | **99.3** |

**Table 39: Nutritional Facts per serving (45 grams):**

| | |
|---|---|
| Protein | 11.2 grams |
| Dietary Fiber | 1.1 grams |
| Carbohydrates | 20.7 grams |
| Fat | 2.1 grams |

### Procedure:

Heat liquids to about 46°C (115°F).
Add Oat Syrup Solids and Xanthan Gum.
Mix ingredients and liquids for 40 second at speed 2 on Kitchen Aid, stop the mixer and scrape the mix from the bowl wall.
Add Preserves, Date Paste and Vanilla.
Mix for and additional 60 seconds at speed 2.
Add dries and mix for 10 seconds and speed 1. Stop mixer and scrape the mix. Mix for an additional 10 seconds and stop the mix.
Form the bar sheets and cut the bars to the proper size to meet serving size. Add melted Yogurt Coating in one side of the bars.
Cool down the bars and wrap them up.

### Example 46 - Trail Mix

**Table 40: Trail Mix: Granola Clusters "Snacks" or Readv-to-Eat Cereal:**

| **Ingredients** | **%** |
|---|---|
| Sovex Toasted Oats | 17.54 |
| Honey | 16.56 |
| Brown Rice Syrup CNP DE60 | 7.42 |
| SUPRO® Nuggets 173 (Table 13/ Formula 16) | 25.06 |
| Dried Sweetened Cranberries | 7.89 |
| Drum Dried Blueberry 40 (MDM 2008) | 7.89 |
| Whole Natural Almonds BDG | 7.89 |
| Dried Apricots DFA | 7.89 |
| ISUPRO® 430 ISP | 1.86 |
| **Total** | **100.00** |

**Table 41 Nutrition Facts per Serving (40grams)**

| | |
|---|---|
| Protein | 9 grams |
| Dietary Fiber | 2 grams |
| Carbohydrates | 23 grams |
| Fat | 3 grams |

### Procedure:

Mix liquids at speed 2.
Add dries and mix them at speed 1.
Bake on parchment paper on baking sheets at 177°C (350°F) until golden brown. Add fruit pieces to the warm trail mix right after baking.
Remove, turn the dough and bake it for one or two more minutes.
Remove trail mix from the oven; allow setting and hardening, then crumbling it and package.

### Example 47 Hot Cereal Breakfast

**Table 42 Hot Cereal Breakfast "Multigrain Oat Meal":**

| **Ingredients** | **%** |
|---|---|
| Sovex Toasted Oats | 43.00 |
| SUPRO® Nuggets 173(Example 16) | 42.50 |
| Light Brown Sugar CFC | 10.00 |
| Cinnamon FI. FONA 827.182 | 0.50 |
| Table Salt | 2.00 |
| Ground Nutmeg AST | 2.00 |
| **Total** | **100.00** |

**Table 43 Nutrition Facts per serving (100g)**

| | |
|---|---|
| Protein | 32 grams |
| Dietary Fiber | 5 grams |
| Carbohydrates | 52 grams |
| Fat | 7 grams |

### Procedure:

Mix all ingredients on speed one in kitchen aid mixer until uniform blend.
Add to ½ cup of water and heat until warm.

### Example 48 Cracker:

**Table 44 Cracker Formulation**

| **Ingredients:** | % |
|---|---|
| SUPRO®XT219D ISP | 4.50 |
| Multipurpose white wheat flour | 10.00 |
| Vital Wheat Gluten | 2.00 |
| Whole Wheat Flour | 19.85 |
| Honey | 3.05 |
| Soybean oil | 7.00 |
| Sugar | 7.10 |
| SUPRO®173 Nuggets(Example 16) | 12.00 |
| Unsalted Butter | 7.90 |
| Water | 16.00 |
| Salt | 0.45 |
| Soy lecithin | 0.45 |
| Starch | 9.00 |
| **Total** | **100.00** |

**Table 45 Nutrition Facts per serving (30g)**

| | |
|---|---|
| Protein | 5.0 grams |
| Dietary Fiber | 1.0 grams |
| Carbohydrates | 13.0 grams |
| Fat | 4.5 grams |

### Procedure:

Weight the ingredients separately.
Melt butter and add it to the mixing bowl and combine the honey.
Add soy bean oil and sugar.
Start the Kitchen Aid mixer at speed 2 for 60 seconds.
Stop mixer and add all dry ingredients. Start the mixer at speed 1 for 45 seconds. Stop mixer and scrape bowl wall and mixer attachment.
Mix at speed 1 while adding water until dough is formed.
Work dough by hand to form a dough ball and let it sit for 10 minutes.
Add additional 65g of water. Work dough by hand.
Press out dough by hand or through a sheeter set at 5.0. Pass the dough again to the sheeter to a setting of 2.25.
Cut the sheet with square cookie cutter and place them on cookie sheet.
After 3 minutes into the baking process, take them out of the over and put holes in the crackers using a fork.
Bake in toastmaster oven at 149°C (300°F) for 15 minutes.

While the invention has been explained in relation to exemplary embodiments, it is to be understood that various modifications thereof will become apparent to those skilled in the art upon reading the description. Therefore it is to be understood that the invention disclosed herein is intended to cover such modification as fall within the scope of the appended claims.

## Claims

1. A process for preparing an amorphous protein extrudate, the process comprising
(a) mixing a protein and water in an extruder to form a mixture;
(b) pressurizing the mixture in the extruder to a pressure of at least 1379 KPa (200 psi) to form a pressurized mixture;
(c) heating the pressurized mixture in the extruder to a temperature of at least 80°C to form a heated and pressurized mixture;
(d) extruding the heated and pressurized mixture through an extruder die to a reduced pressure environment to expand the mixture and form an extrudate;
(e) cutting the extrudate into a plurality of pieces at the time of expansion, wherein the cutting blades are positioned between 0.2 mm to 10 mm from the extrusion die face; and
(f) the pieces are dried to a water content of from 1 % by weight to 10% by weight to form the amorphous shaped protein extrudate having a density from 0.02 g/cm³ to 0.5 g/cm³ based on the weight of the amorphous protein extrudate and comprising at least 50% protein by weight on a moisture-free basis.

2. A process according to claim 1 wherein the mixture comprises at least 60%, 70%, 80%, 90% or 99% or more protein by weight of the mixture on a moisture-free basis.

3. A process according to claim 1 or claim 2 wherein the mixture comprises one or more proteins selected from the group consisting of vegetable proteins, dairy proteins or meat proteins.

4. A process according to any preceding claim wherein the mixture comprises a vegetable protein selected from cereal grains, such as wheat, corn, or barley; or legumes, such as soybeans or peas.

5. A process according to any preceding claim wherein the mixture comprises a soy protein.

6. A process according to any preceding claim wherein the mixture comprises a blend of isolated soy proteins comprising between 50% to 75% by weight of a hydrolyzed isolated soy protein on a moisture-free basis and between 5% to 15% by weight of an unhydrolyzed isolated soy protein on a moisture-free basis, based on the weight of the mixture.

7. A process according to any preceding claim wherein the mixture further comprises a source of starch.

8. A process according to any preceding claim wherein the mixture comprises between 15% and 40% by weight carbohydrates on a moisture-free basis.

9. A process according to any preceding claim wherein the mixture comprises between 10% and 50% by weight of fiber.

10. A process according to any preceding claim, wherein the extrudate is dried to a water content of from 2% by weight to 6% by weight.

11. A process according to any preceding claim, wherein the extrudate is dried to a hardness of between 1000 and 50,000 grams, preferably between 5000 and 40,000 grams and more preferably between 7000 and 30,000 grams.

12. A process according to any preceding claim, wherein the cutting blades are positioned between 0.5 mm and 3.0 mm from the extrusion die face.

13. A process according to any preceding claim, wherein the amorphous protein extrudate has a dry bulk density between 0.1 g/cm³ and 0.4 g/cm³, preferably between 0.15 g/cm³ and 0.35 g/cm³, and more preferably between 0.2 g/cm³ and 0.27 g/cm³.

14. A food product comprising an amorphous protein extrudate prepared by the process of any one of claims 1-13, the food product being selected from snack foods, bars, granola, trail mix or cold or hot cereals.

15. The food product of claim 14 which is a low density snack food product.
